# FASCICULE DE BREVET EUROPEEN

(11) **EP 3 100 341 B1**
(45) Date de publication et mention de la délivrance du brevet: **12.08.2020**
(21) Numéro de dépôt: 15705664.9
(22) Date de dépôt: 29.01.2015
(51) Int. Cl.: H02K 33/06, H02K 33/16

(54) **ACTIONNEUR ELECTROMAGNETIQUE LINEAIRE PRESENTANT DEUX ORGANES MOBILES INDEPENDANTS**
ELEKTROMAGNETISCHER LINEARAKTUATOR MIT ZWEI UNABHÄNGIGEN MOBILEN ELEMENTEN
ELECTROMAGNETIC LINEAR ACTUATOR WITH TWO INDEPENDENT MOBILE ELEMENTS

(30) Priorité: 29.01.2014 FR 1450693
(43) Date de publication de la demande: 07.12.2016
(73) Titulaire: Moving Magnet Technologies, 25000 Besançon (FR)
(72) Inventeur: BIWERSI, Stéphane, F-25140 Frambouhans (FR); RIOS-QUESADA, Javier, F-25000 Besançon (FR); DELBAERE, Michaël, F-25720 Avanne (FR); LOUSSERT, Guillaume, F-25000 Besançon (FR); ANDRIEUX, Gaël, CH-2533 Evilard (CH)
(74) Mandataire: IP Trust
(86) Numéro de dépôt international: PCT/FR2015/050207
(87) Numéro de publication internationale: WO 2015/114261

(56) Documents cités:
- EP-A2- 2 320 543
- WO-A1-00/63556
- US-A- 6 098 288
- US-A1- 2013 193 780

## Description

### Domaine de l'invention

L'invention se rapporte aux domaines des actionneurs électromagnétiques présentant plusieurs organes mobiles indépendants mécaniquement et se déplaçant linéairement.

### Description de l'art antérieur

On connaît dans l'art antérieur le brevet américain US6098288 concernant un rasoir électrique qui comprend un actionneur linéaire électromagnétique qui va déplacer l'élément mobile selon un mouvement va et vient et au moins un premier et un second éléments de type lame qui entrent en interaction afin de couper les poils. Ces éléments mobiles sont aimantés.

On connaît aussi la demande de brevet européen EP2320543 qui décrit un actionneur comprenant un ensemble d'aimant permanent magnétisés dans une direction perpendiculaire à une direction de mouvement du dispositif de déplacement de telle sorte que les pôles magnétiques ayant des polarités différentes soient en alternance sur les surfaces polaires magnétiques des aimants le long de la direction de mouvement, un stator comprenant des premier et second pôles magnétiques disposés sur les deux côtés de la rangée d'aimants permanents, dans une direction perpendiculaire et comprenant chacun des pôles magnétiques faisant face aux surfaces de pôle magnétique, un seul enroulement de phase qui excite les parties de pôles magnétiques formant la première et deuxième ensembles de parties polaires magnétiques.

La demande internationale WO 2000063556 décrit un organe de commande à piston oscillant, destiné notamment à une pompe à vide à piston oscillant, comportant un carter (2) dans lequel est situé un cylindre (3), un piston (4) pouvant effectuer un mouvement alternatif dans ledit cylindre, ainsi qu'un organe de commande électromagnétique destiné au piston (4) et comprenant côté stator un électro-aimant (11) et côté piston au moins un aimant permanent (18, 19). Afin d'améliorer la durée de vie de cet organe de commande à piston oscillant, des aimants permanents (15, 16) sont placés côté stator, et le ou les aimants permanents (18, 19) du stator sont conçus et placés de sorte que le piston (4) occupe une position axiale sensiblement centrale, à l'état de repos.

La demande américaine US2013/193780 décrit un actionneur présentant une partie fixe qui comprend un pôle statorique une bobine fixée au pôle statorique, une première section mobile qui comprend un premier aimant magnétisé dans une direction de l'intérieur vers l'extérieur et disposé de façon à couvrir la surface périphérique extérieure d'une extrémité dans une direction axiale de la partie fixe, qui est monté élastiquement sur le pôle statorique, et qui est mobile dans la direction axiale. Une deuxième partie mobile comprend un second aimant magnétisé dans la direction de l'intérieur vers l'extérieur et disposé pour couvrir le périphérique extérieure surface de l'autre extrémité dans la direction axiale de la partie fixe, qui est monté élastiquement sur le pôle statorique, et qui est mobile dans la direction axiale. Lorsque le courant circule dans la bobine, la première section mobile et la deuxième section déménagement mobile dans les directions opposées.

L'axe de la bobine est monté selon une direction horizontale. La demande américaine US6098288 décrit un actionneur électromagnétique linéaire selon le préambule de la revendication indépendante 1.

### Inconvénients de l'art antérieur

Les solutions de l'art antérieur présentent différents inconvénients. Les structures proposées sont plus la plupart déséquilibrées mécaniquement et/ou magnétiquement qui sont sources de vibrations et de nuisances sonores.

Par ailleurs, les organes mobiles sont, dans les solutions de l'art antérieur, associés à des aimants qui viennent augmenter la masse et l'inertie et donc dégrader les performances de tels actionneurs.

### Exposé de l'invention

Ainsi, l'objet de l'invention est de proposer un actionneur permettant deux mouvements indépendants et résolvant les problèmes qui viendraient à l'homme de métier cherchant à adapter les dispositifs précédents.

Particulièrement, l'objet principal de l'invention est de proposer un actionneur permettant l'équilibre des forces transverses s'appliquant aux organes mobiles, par un agencement avantageux d'aimants permanents au sein de la structure. Ce faisant, le porte-à-faux présent dans les actionneurs de l'art antérieur identifié précédemment est fortement réduit voire compensé. L'actionneur peut ainsi être dimensionné au plus juste pour répondre à un cahier des charges donné (par exemple réaliser un effort axial donné pour lutter contre une charge).

Un autre objet de l'invention est de réaliser un actionneur donnant la possibilité de générer un mouvement antagoniste des organes mobiles avec une seule bobine électrique de commande alimentée de manière bipolaire ou avec deux bobines imbriquées ou concentriques commandées de manière unipolaire. Cette réalisation permet de concevoir un actionneur compact, notamment dans le sens transverse au mouvement.

Un autre objet de l'invention est de permettre la réalisation d'un actionneur oscillant ou d'un actionneur monostable ou d'un actionneur bistable, c'est-à-dire présentant respectivement aucune, une ou deux positions stables sans courant sur les extrémités de la course et cela pour les deux organes mobiles indépendants (le terme « indépendant » s'entend comme l'absence d'une liaison mécanique entre les deux organes mobiles).

Plus particulièrement, l'invention se rapporte à un actionneur électromagnétique linéaire comportant un stator excité par au moins une bobine électrique disposée autour d'un axe de symétrie de la bobine et deux pôles statoriques ferromagnétiques situés, axialement, de part et d'autre de la bobine ainsi qu'au moins deux organes mobiles indépendants en absence d'une liaison mécanique entre les deux organes mobiles, chacun desdits organes mobiles étant formé d'un matériau ferromagnétique, caractérisé en ce qu'il comporte au moins trois pôles aimantés fixes par rapport aux organes mobiles, chacun des pôles aimantés présentant une aimantation permanente en l'absence de courant, et étant disposés à l'intérieur de la bobine, respectivement un premier pôle aimanté positionné au voisinage du plan médian séparant les deux organes mobiles et contenant l'axe de symétrie de la bobine, et un deuxième pôle aimanté et un troisième pôle aimanté, lesdits premier, deuxième et troisième pôles aimantés étant disposés, latéralement, de part et d'autre desdits organes mobiles entre lesdits organes mobiles et la bobine.

On entend, par « pôle aimanté », un pôle magnétique présentant une aimantation permanente en l'absence de courant.

Par ailleurs, les organes mobiles sont uniquement formé en matériau ferromagnétique doux et sont distincts des pôles aimantés, fixes par rapport aux organes mobiles.

les organes mobiles d'une part et les pôles aimantés d'autre part sont des éléments distincts, les aimants étant fixes et immobiles.

De manière préférentielle, les organes mobiles se déplacent suivant des directions identiques mais de sens opposés.

Pour cela, les premier, deuxième et troisième pôles aimantés sont aimantés suivant une direction transversale, orthogonale à l'axe de la bobine et les deuxième et troisième pôles aimantés sont aimantés dans des sens identiques et opposés au sens d'aimantation du premier pôle aimanté.

Les deuxième et troisième pôles aimantés peuvent être solidaires l'un de l'autre ou des parties distinctes.

Dans un mode particulier, les deuxième et troisième pôles aimantés sont constitués par une seule bague aimantée diamétralement.

Dans un mode de réalisation particulier, les deux pôles statoriques présentent des excroissances dirigées axialement sous la forme de cornes polaires pour favoriser un appel de force en début de course.

L'actionneur peut présenter deux bobines électriquement indépendantes coaxiales qui peuvent, de plus, être imbriquées afin de pouvoir utiliser une alimentation unipolaire pour chaque bobine. De même ; la bobine électrique peut présenter une géométrie de révolution axisymétrique pour une facilité de réalisation et une optimisation de son facteur de forme.

Dans un autre mode de réalisation particulier, la bobine électrique est portée par un corps présentant les propriétés d'un aimant permanent et les deuxième et troisième pôles aimantés sont constitués, au moins en partie, par ledit corps aimanté.

Un capteur de position indiquant la position d'au moins un des organes mobiles peut être utilisé avantageusement placé dans un logement à proximité des organes mobiles.

De manière à optimiser l'interface mécanique avec les organes extérieurs à déplacer, les organes mobiles sont avantageusement prolongés par des axes de sortie rapportés sur les organes mobiles. Des matériaux différents pour l'axe de sortie et l'organe mobile peuvent aussi être utilisés en fonction des impératifs mécaniques demandés en sortie.

Enfin, un des avantages de l'invention et de l'utilisation des axes de sortie est la possibilité d'obtenir un entraxe des organes mobiles différent de l'entraxe entraxe des axes de sortie.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- la figure 1 : un premier mode de réalisation avec l'agencement des aimants, des bobines et des organes mobiles ainsi que 4 positions stables de l'actionneur, notées (a), (b), (c) et (d), en absence de courant dans le bobinage, ainsi que les chemins de flux principaux pour chacun des aimants et la direction des forces appliquées ;
- la figure 2 : les 2 positions stables en présence de courant dans le premier mode de réalisation ;
- la figure 3 : un deuxième mode de réalisation avec un actionneur présentant 3 aimants parallélépipédiques et une bobine de forme rectangulaire ;
- la figure 4 : un troisième mode de réalisation avec un actionneur présentant des aimants latéraux en forme de tuile et une bobine axisymétrique ;
- la figure 5 : un quatrième mode de réalisation avec une bobine cylindrique présentant un actionneur où on remplace les 2 aimants latéraux par un aimant bague bipolaire ;
- la figure 6 : un cinquième mode de réalisation présentant un actionneur où les 3 aimants sont reconstitués à l'aide de 2 aimants cylindriques aimantés radialement ;
- la figure 7 : un sixième mode de réalisation avec un actionneur dont le corps de bobine a été fait dans un matériau magnétisable ;
- la figure 8 : un mode de réalisation alternatif présentant, en vue de côté, un stator avec des dents polaires ;
- la figure 9 : un deuxième mode de réalisation alternatif présentant des dents polaires et des organes mobiles d'extrémités coniques ;
- la figure 10 : un mode de réalisation alternatif avec des cales amagnétiques ;
- la figure 11 : un mode de réalisation permettant une dissymétrie de la force sans courant de l'actionneur ;
- la figure 12 : un mode de réalisation d'un actionneur vibrant à double sortie antagoniste ;
- la figure 13 : un mode de réalisation intégrant un capteur permettant de déterminer la position des organes mobiles ;
- la figure 14 : un mode de réalisation avec des aimants parallélépipédiques, ayant des aimants supplémentaires;
- la figure 15 : deux modes de réalisation alternatifs présentant, des stators avec des dents polaires placées dans l'espace entre les aimants et le stator ;
- la figure 16 : un mode de réalisation alternatif dans lequel le pôle aimanté central est formé par deux aimants de part et d'autre d'une pièce ferromagnétique permettant de conduire le flux ;
- la figure 17 : un mode de réalisation alternatif dans lequel l'aimant central comporte des pièces polaires.

### Description détaillée des modes de réalisations

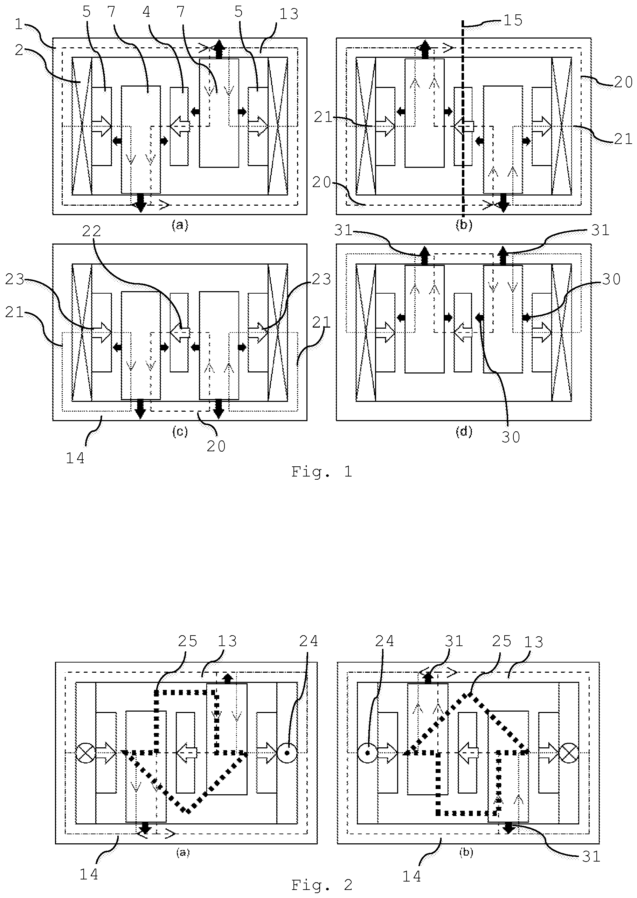

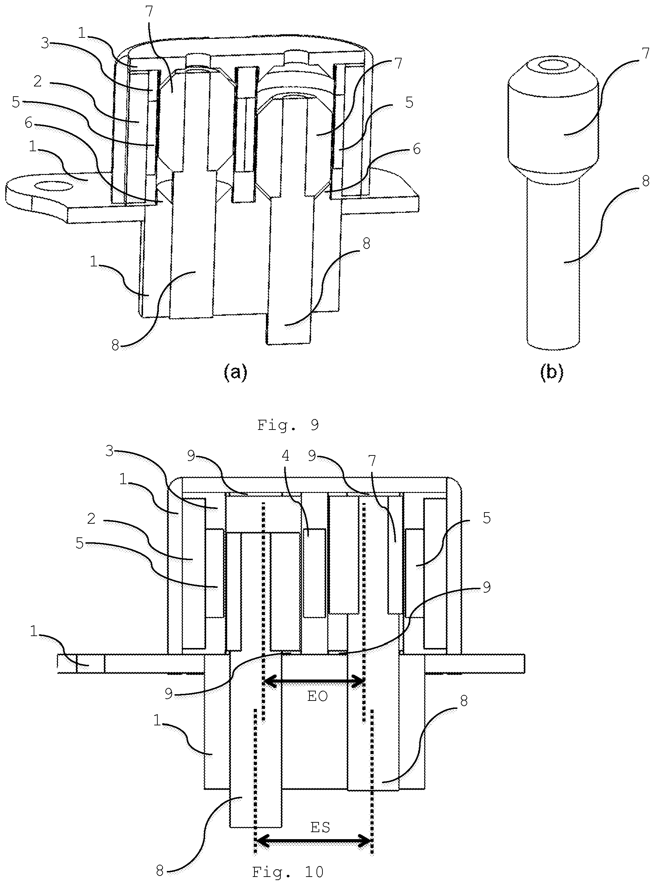

La figure 1 et la figure 2 présentent de manière schématique une coupe transversale de la structure d'un actionneur selon les termes de l'invention dans un premier mode de réalisation. Un ensemble de pièces ferromagnétiques forme une culasse ferromagnétique statorique(1) qui contient une bobine électrique (2) entourée autour d'un axe (15) de symétrie. À l'intérieur de cette bobine sont placés deux organes mobiles (7) ferromagnétiques (doux) indépendants l'un de l'autre et trois aimants permanents. Le premier pôle aimanté (4) est positionné dans le plan médian séparant les deux organes mobiles (7) et deux autres pôles aimantés (4) de part et d'autre des organes mobiles (7). L'aimantation des pôles aimantés (4, 5) est orthogonale à l'axe de la bobine (2) et le sens de l'aimantation (22) du pôle aimanté central (4) s'oppose au sens de l'aimantation (23) des aimants latéraux. De part et d'autre de la bobine (2), axialement, sont situés deux pôles statoriques (13, 14), en matériau ferromagnétique doux. Chacun des pôles statoriques (13, 14) participent aux différents circuits magnétiques définis sur les figures 1(a) à 1(d) pour aider au bouclage du flux magnétique autour de la bobine (2). Dans l'exemple des figures 1 et 2 les pôles statoriques (13, 14) sont sous la forme de pôles droits ou rectilignes mais ils peuvent être sous la forme de cornes polaires comme présenté en figure 9.

La figure 1 montre le comportement de l'actionneur en absence de courant avec quatre positions stables, les cas (a) et (b) présentant les organes mobiles (7) dans des positions stables sur deux côtés opposés tandis que les cas (c) et (d) montrent les organes mobiles (7) dans des positions stables sur un même côté, respectivement bas et haut. Il faut noter que dans les positions présentées sur la figure 1.c et la figure 1.d, le flux magnétique (20) de l'aimant central et le flux magnétique (21) de l'aimant latéral correspondant dans un organe mobile présentent un sens opposé à celui des flux dans l'autre organe mobile (7). Sur la figure 1.a et la figure 1.b, le sens du flux magnétique (20) de l'aimant central et le flux magnétique (21) de l'aimant latéral correspondant ont le même sens sur les deux organes mobiles (7). Dans tous les cas, les forces perpendiculaires (30) à l'axe de la bobine (2) ont tendance à se compenser limitant ainsi le porte-à-faux subit par les organes mobiles (7). La force utile (31) produite par l'actionneur est donc principalement orientée selon l'axe de déplacement de chacun des organes mobiles (7).

La figure 2 montre le comportement de l'actionneur en présence de courant. Dans ce cas, la bobine électrique (2) crée un champ magnétique qui impose un sens (25) au flux magnétique. Les organes mobiles (7) vont se positionner de façon à ce que le flux de l'aimant central (20) et le flux des aimants latéraux (21), présentent le même sens dans les organes mobiles (7) que celui du flux dû au courant (25).

De ce fait, l'actionneur selon les termes de l'invention peut avoir deux fonctionnements différents :
- Sans apport d'une force extérieure et alimenté par un courant alternatif, les organes mobiles (7) oscillent entre les positions de la figure 2.a et celle de la figure 2.b avec un mouvement alterné et antagoniste, chacun des organes mobiles (7) venant en contact avec alternativement le pôle statorique (13) ou le pôle statorique (14) ;
- En présence d'une force extérieure qui puisse placer l'actionneur sur les positions de la figure 1.c ou de la figure 1.d, l'actionneur pourra évoluer, une fois l'alimentation électrique établie en déplaçant un seul organe mobile (7), soit vers la position de la figure 2.a, soit vers la position de la figure 2.b en fonction du sens du courant électrique (24) qui alimente la bobine (2) .

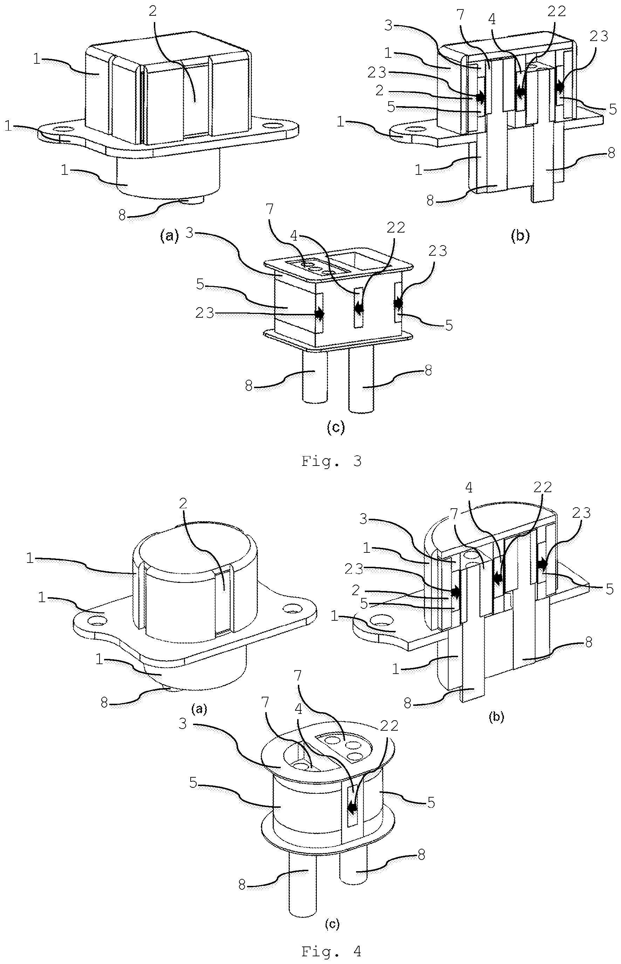

La figure 3 montre un mode de réalisation simple à fabriquer. Le corps de bobine (3) présente 3 encoches pour placer les pôles aimantés (5) et le pôle aimanté (4) et 2 passages pour les organes mobiles (7). Le capot supérieur du stator (1) est fait en tôle plié, et le pôle aimanté (4) et les pôles aimantés (5) sont des parallélépipèdes aimantés selon leur épaisseur. Toutefois, le sens d'aimantation de l'aimant central (22) est opposé à celui des deux autres aimants (23).

Dans cet exemple de réalisation en figure 3, la sortie de mouvement hors de l'actionneur n'est pas réalisée par les organes mobiles (7) mais via des axes de sortie (8) solidaires des organes mobiles (7) par, au choix, vissage, chassage, collage ou tout autre procédé connu permettant de rendre solidaires deux pièces. Par exemple, un contact de type rotule peut aussi être envisagé pour permettre la rotation de l'axe de sortie (8) sans la rotation de l'organe mobile (7) et ainsi permettre d'encaisser des couples extérieurs qui s'appliqueraient aux axes de sortie sans endommager les organes mobiles (7). Les axes de sortie (8) sont préférentiellement amagnétiques ou faiblement magnétique (perméabilité relative de quelques unités) afin d'éviter des fuites magnétiques préjudiciable aux efforts crées par l'actionneur.

La figure 4 montre un mode de réalisation de l'actionneur avec une bobine optimisée (2) car présentant une forme arrondie plus favorable diminuant la résistance intrinsèque par une longueur de spire moyenne plus faible. Cette réalisation impose l'utilisation de pôles aimantés (5) en forme de tuile. Leur aimantation (23) peut être diamétrale ou radiale.

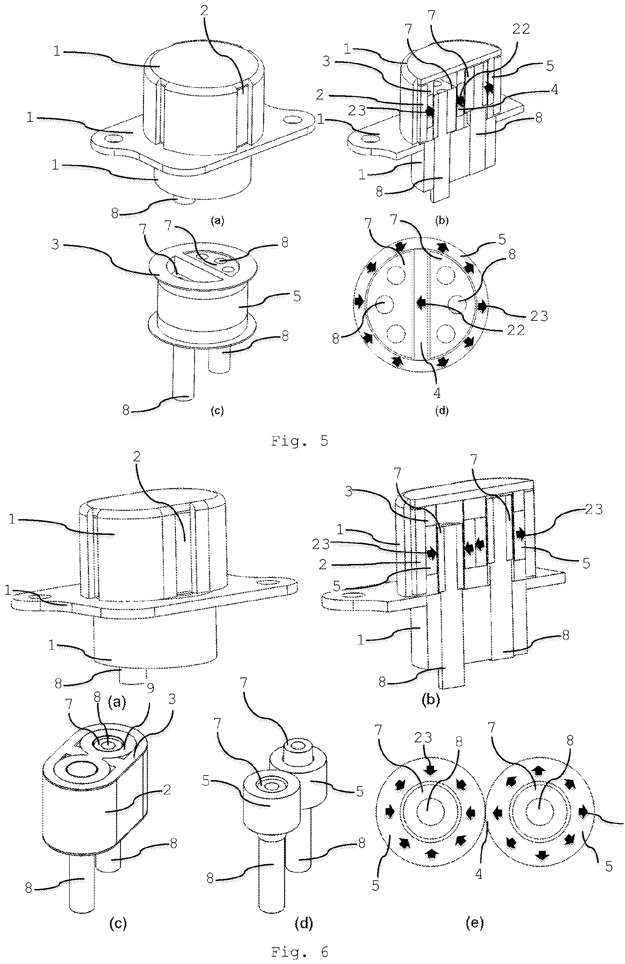

La figure 5 montre un mode de réalisation de l'actionneur avec une bobine cylindrique (2) ce qui permet d'obtenir la résistance intrinsèque la plus faible. Ce mode de réalisation permet aussi d'envisager plus facilement l'utilisation de deux bobines électriques coaxiales qui peuvent être superposées ou imbriquées (bobinées « deux fils en main »). L'utilisation de deux bobines permettra ainsi d'utiliser deux alimentations électriques unipolaires à opposer à l'alimentation bipolaire qu'il faudra utiliser si on utilise une seule bobine. Cette réalisation utilise un aimant bague bipolaire (5) à la place de 2 aimants latéraux. Les deuxième et troisième pôles aimantés (5) de l'invention s'entendent en effet comme des parties aimantées qui peuvent être solidaires ou bien distinctes selon le mode de réalisation choisi. L'aimantation de l'aimant extérieur (23) peut être radiale ou diamétrale.

La figure 6 montre un mode de réalisation particulier où on utilise 2 aimants bague (5) aimantés radialement (23), l'un vers l'intérieur et l'autre vers l'extérieur. En les accolant nous obtenons le même type d'aimantation que dans le cas général d'un actionneur avec 3 aimants plats. Cette solution permet d'utiliser des organes mobiles (7) de forme cylindrique et rend l'actionneur insensible à leur rotation. Dans l'exemple de la figure 6, une cale amagnétique (9) est utilisée pour maintenir les aimants.

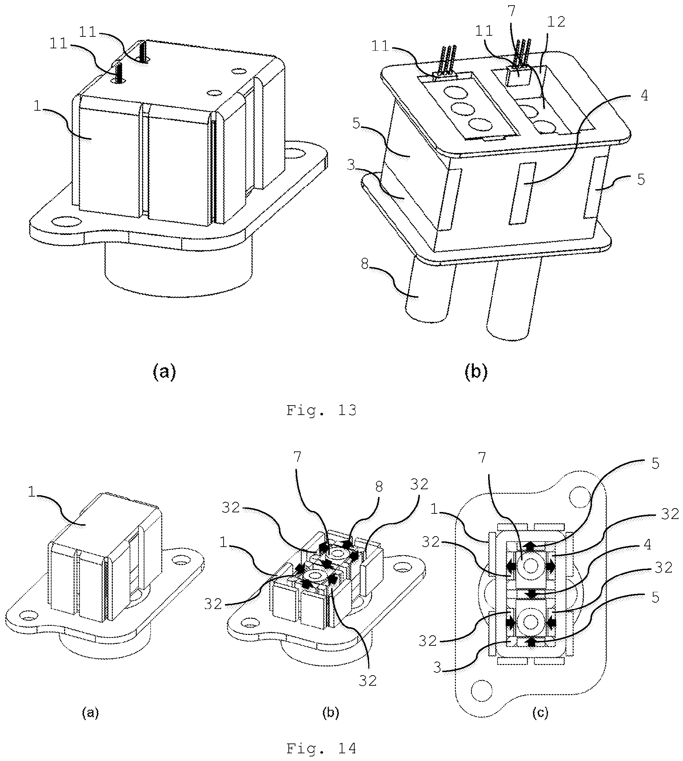

La figure 14 montre un mode de réalisation particulier où, à partir d'un mode de réalisation avec des aimants parallélépipédiques pour le pôle central (4) et les pôles latéraux (5) et en ajoutant quatre pôles aimantés supplémentaires (32), on maximise le flux magnétique dans les parties mobiles tout en gardant une forme d'aimant simple.

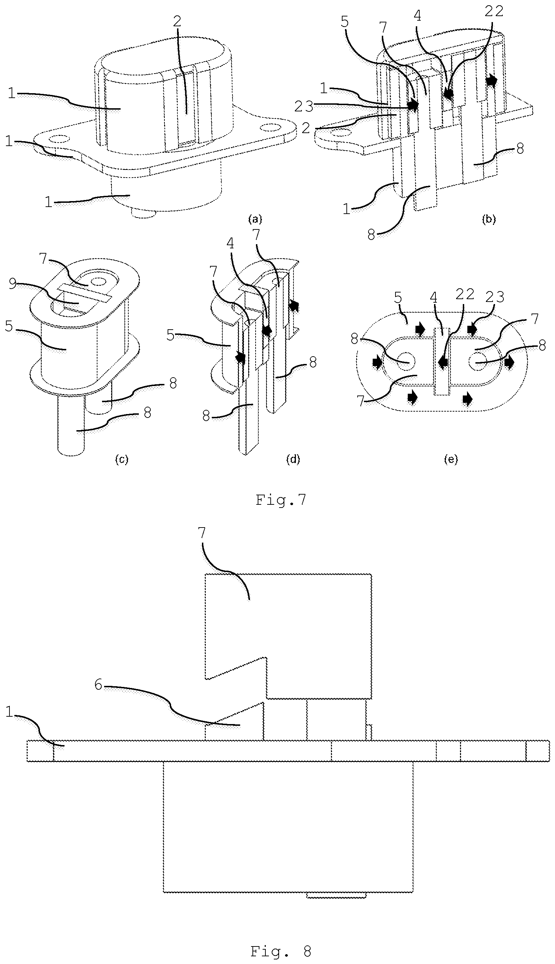

La figure 7 montre un actionneur présentant un corps de bobine fabriqué dans une matière magnétisable servant à remplacer les aimants latéraux (5) . Il comporte en son centre un réceptacle pour le pôle aimanté (4) qui doit être positionné en hauteur en utilisant des cales (9). Dans sa version la plus simple, cet aimant peut être fabriqué par injection (aimant à liant plastique) et aimanté d'un seul tenant.

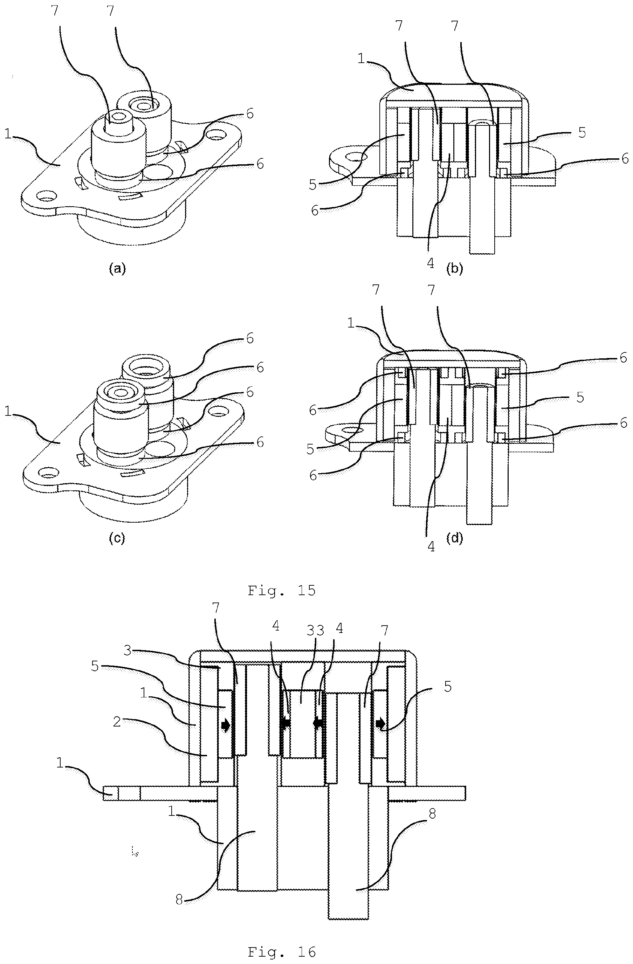

La figure 8 et la figure 15 montrent des réalisations de stator (1) avec des cornes polaires (6) utilisées pour renforcer la force de sortie de position stable dans un sens du mouvement.

Dans l'exemple de la figure 8, la corne polaire (6) est solidaire du stator (1) et située en-dessous de l'organe mobile (7). Lorsque l'organe mobile (7) qui lui fait face est en position haute, la proximité de la corne polaire (6) permet de générer une force d'appel par l'effet d'une réluctance variable favorable et permet éventuellement le déplacement même dans des cas critiques (températures critiques, frottement inhabituel,).

Dans les exemples de la figure 15, on utilise des cornes polaires statoriques (6) placées dans l'espace entre les aimants ((4) et (5) et le stator (1) ce qui permet d'avoir une forme simple pour l'organe mobile (7). Les figures 15.a et 15.b montrent le cas de cornes polaires (14) placées d'un seul côté de l'actionneur permettant l'obtention d'une force d'appel dans un sens du mouvement. Les figures 15.c et 15.d montrent le cas des cornes polaires (14) placées de chaque côté du stator (1) pour obtenir une force d'appel dans les deux sens du mouvement.

La figure 9 montre une réalisation de stator (1) avec des cornes polaires (6) réalisées au stator (1) de part et d'autre des organes mobiles (7). Les organes mobiles (7) présentent une forme conique complémentaire de la forme au stator (7), permettant d'augmenter les efforts magnétiques produits. Il s'agit d'un actionneur basé sur la réalisation présentée sur la figure 6 avec les avantages de la présence de cornes polaires expliqués précédemment.

La figure 16 montre une réalisation du pôle aimanté central par une superposition de deux aimants (4) et une pièce ferromagnétique (32) permettant le passage du flux. Cette structure permet de réduire la taille de l'aimant central lorsque l'entraxe de l'actionneur est très important et de réduire la masse des organes mobiles (7).

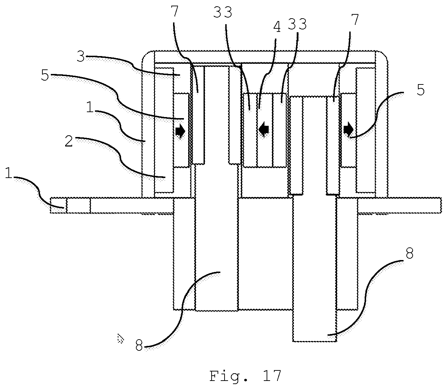

La figure 17 montre une réalisation similaire à celle de la figure 16, avec un seul aimant central (4) et deux pièces polaires ferromagnétiques (33) de part et d'autre. Le but de cette structure est la réduction de la masse en mouvement et l'équilibrage de la masse des organes mobiles (7) autour de l'axe de sortie (8).

La figure 10 montre une réalisation de l'actionneur avec une course possible plus importante que la course utile recherchée. La présence de cales amagnétiques (9) permet en effet de réduire la course possible à la course utile sans modifier l'actionneur. Un actionneur selon les termes de l'invention peut, selon les dimensionnements, présenter une force de maintien (appelé « collage ») entre l'organe mobile (7) et le stator (1) trop importante limitant la possibilité de sortir de cette position avec une puissance électrique faible. L'utilisation de cales permet ainsi de moduler la force de collage recherchée et aussi d'augmenter le niveau de la force avec courant lors de la sortie de la position stable (appelé « décollage ») des organes mobiles (7). L'organe mobile (7) à droite sur la figure 10 est en position de collage en appui sur la cale (9) amagnétique.

La réalisation de cette figure 10 permet aussi d'apprécier l'intérêt de présenter des axes de sortie (8) qui sont rapportés sur les organes mobiles (7). Outre les effets déjà décrits relativement à la figure 3, ces axes de sortie permettent de générer deux sorties dont l'entraxe ES est différent de l'entraxe EO des organes mobiles (7) au sein de l'actionneur. Sur l'exemple de la figure 10, l'entraxe ES des axes de sortie (8) est ainsi supérieur à l'entraxe EO des organes mobiles (7). Le fait que ces axes de sorties (8) soient rapportés permet aussi de rendre très flexible la réalisation de différentes variantes qui se distingueraient à la fois par des entraxes ES différents mais aussi par des diamètres d'axes de sorties (8) différents.

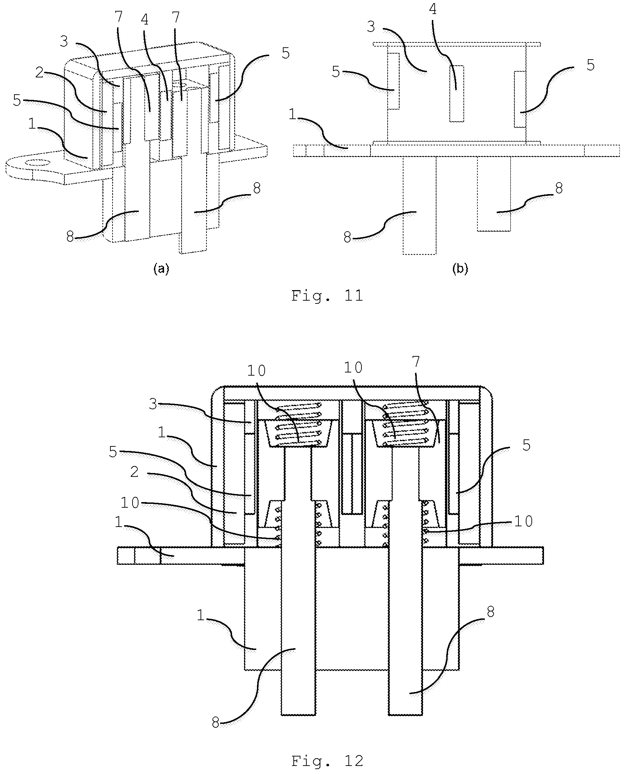

La figure 11 montre une réalisation qui permet d'obtenir des forces sans courant différentes pour chaque organe mobile en jouant sur la position relative des pôles aimantés latéraux (5) entre eux et par rapport avec le stator (1). Le cas présenté en figure 11 permet d'obtenir une force de collage plus importante d'un côté que de l'autre pour un organe mobile (7) donné et dans un sens opposé à celui de l'autre organe mobile (7) en approchant, respectivement éloignant, les aimants des positions extrêmes. Des réalisations permettant d'augmenter la force d'un seul côté de l'actionneur pour les 2 organes mobiles (7) peuvent être effectuées en faisant varier la position du pôle aimanté intérieur (4).

La figure 12 montre une réalisation où les organes mobiles (7) sont suspendus par des ressorts (10). Ceci permet d'obtenir deux types d'actionneur selon la raideur choisie des ressorts (10). Soit la raideur est très importante et la force avec courant de l'actionneur ne permet pas de maintenir le collage sur les pôles du stator (1), on obtient alors un actionneur vibrant à double sortie antagoniste simple. Soit la raideur n'est pas suffisamment importante pour empêcher le collage sur les pôles du stator (1) nous obtenons alors un actionneur présentant 3 états stables pour chaque organe mobile (7) : 2 avec le collage magnétique de part et d'autre de la course et 1 en position centrale par la force élastique des ressorts (10).

La figure 13 montre une réalisation intégrant un capteur de position (11) permettant de déterminer la position de chaque organe mobile (7) et cela dès la mise sous tension. Dans ce mode de réalisation, le capteur (11) est sous la forme de deux sondes magnétosensibles qui sont positionnées sur la partie supérieure de l'actionneur à proximité des organes mobiles (7) dans un logement (12) libre, ici latéral, généré entre le corps de bobine (3) et les organes mobiles (7). Ces sondes magnétosensibles peuvent être de type digital, c'est-à-dire de type « tout ou rien » discriminant la position haute ou basse des organes mobiles (7), ou alors de type analogique, c'est-à-dire déterminant la position des organes mobiles (7) sur toute leur course.

Sur l'exemple de la figure 13, on utilise deux sondes magnétosensibles dont le but est de discriminer la position de chacun des organes mobiles (7). Il peut être envisagé de n'utiliser qu'une seule sonde magnétosensible pour s'intéresser à un seul organe mobile (7). De même, dans l'exemple de la figure 13, les deux sondes sont des éléments différentiés et indépendants. Il peut être envisagé d'utiliser des sondes magnétosensibles présentées dans un seul boitier commun ou d'utiliser une seule sonde présentant plusieurs axes de sensibilité indépendants.

## Revendications

1. Actionneur électromagnétique linéaire comportant un stator (1) excité par au moins une bobine (2) électrique disposée autour d'un axe (15) de symétrie de la bobine (2) et deux pôles statoriques (13, 14) ferromagnétiques situés, axialement, de part et d'autre de la bobine (2) ainsi qu'au moins deux organes mobiles (7) indépendants en absence d'une liaison mécanique entre les deux organes mobiles (7), chacun desdits organes mobiles (7) étant formé d'un matériau ferromagnétique, **caractérisé en ce qu'**il comporte au moins trois pôles aimantés (4,5) fixes par rapport aux organes mobiles (7), chacun des pôles aimantés (4,5) présentant une aimantation permanente (22, 23) en l'absence de courant, et étant disposés à l'intérieur de la bobine (2), respectivement un premier pôle aimanté (4) positionné au voisinage du plan médian séparant les deux organes mobiles (7) et contenant l'axe (15) de symétrie de la bobine (2), et un deuxième pôle aimanté (5) et un troisième pôle aimanté (5), lesdits premier, deuxième et troisième pôles aimantés (4,5) étant disposés, latéralement, de part et d'autre desdits organes mobiles (7) entre lesdits organes mobiles (7) et la bobine (2).

2. Actionneur électromagnétique linéaire selon la revendication 1 **caractérisé en ce que** les organes mobiles (7) se déplacent suivant des directions identiques mais de sens opposés.

3. Actionneur électromagnétique linéaire selon la revendication 1 ou 2 **caractérisé en ce que** les premier (4), deuxième et troisième pôles aimantés (5) sont aimantés suivant une direction transversale, orthogonale à l'axe (15) de symétrie de la bobine (2) .

4. Actionneur électromagnétique linéaire selon la revendication 3 **caractérisé en ce que** les deuxième et troisième pôles aimantés (5) sont aimantés dans des sens identiques et opposés au sens d'aimantation du premier pôle aimanté (4).

5. Actionneur électromagnétique linéaire selon l'une des revendications précédentes **caractérisé en ce que** les deuxième et troisième pôles aimantés (5) sont solidaires.

6. Actionneur électromagnétique linéaire selon l'une des revendications précédentes **caractérisé en ce que** les deux pôles statoriques (13,14) présentent des excroissances dirigées axialement sous la forme de cornes polaires.

7. Actionneur électromagnétique linéaire selon l'une des revendications précédentes **caractérisé en ce qu'**il comprend deux bobines (2) électriquement indépendantes coaxiales.

8. Actionneur électromagnétique linéaire selon la revendication 7 **caractérisé en ce que** les deux bobines (2) sont imbriquées.

9. Actionneur électromagnétique linéaire selon l'une des revendications 1 à 8 **caractérisé en ce que** la bobine (2) électrique est portée par un corps (3) présentant les propriétés d'un aimant permanent et **en ce que** les deuxième et troisième pôles aimantés (5) sont constitués, au moins en partie, par ledit corps (3) aimanté.

10. Actionneur électromagnétique linéaire selon l'une des revendications précédentes **caractérisé en ce que** la bobine (2) électrique présente une géométrie de révolution axisymétrique.

11. Actionneur électromagnétique linéaire selon l'une des revendications précédentes **caractérisé en ce que** les deuxième et troisième pôles aimantés (5) sont constitués par une seule bague aimantée (5) diamétralement.

12. Actionneur électromagnétique linéaire selon l'une des revendications précédentes **caractérisé en ce qu'**il comprend un capteur de position (11) indiquant la position d'au moins un des organes mobiles (7).

13. Actionneur électromagnétique linéaire selon la revendication 12 **caractérisé en ce que** le capteur de position (11) est placé dans un logement (12) à proximité des organes mobiles (7).

14. Actionneur électromagnétique linéaire selon l'une des revendications précédentes **caractérisé en ce que** les organes mobiles (7) sont prolongés par des axes de sortie (8) rapportés sur les organes mobiles (7).

15. Actionneur électromagnétique linéaire selon la revendication précédente **caractérisé en ce que** les organes mobiles (7) et les axes de sortie (8) sont dans des matériaux différents.

16. Actionneur électromagnétique linéaire selon les revendications 14 ou 15 **caractérisé en ce que** l'entraxe des organes mobiles (7) et l'entraxe des axes de sortie (8) sont différent

## Patentansprüche

1. Elektromagnetischer Linearaktuator, aufweisend einen Stator (1), der durch mindestens eine um eine Symmetrieachse (15) der Spule (2) angeordnete elektrische Spule (2) erregt wird, und zwei ferromagnetische Statorpole (13, 14), die sich axial beiderseits der Spule (2) befinden, sowie mindestens zwei unabhängige mobile Elemente (7) bei Abwesenheit einer mechanischen Verbindung zwischen den zwei mobilen Elementen (7), wobei jedes der mobilen Elemente (7) aus einem ferromagnetischen Material gebildet ist, **dadurch gekennzeichnet, dass** er mindestens drei magnetisierte Pole (4, 5) aufweist, die in Bezug auf die mobilen Elemente (7) fest sind, wobei jeder der magnetisierten Pole (4, 5) eine Permanentmagnetisierung (22, 23) bei Abwesenheit von Strom aufweist, und innerhalb der Spule (2) angeordnet sind, jeweils ein erster magnetisierter Pol (4), der in der Nähe der Mittelebene positioniert ist, welche die beiden mobilen Elemente (7) trennt und die Symmetrieachse (15) der Spule (2) enthält, und ein zweiter magnetisierter Pol (5) und ein dritter magnetisierter Pol (5), wobei der erste, zweite und dritte magnetisierte Pol (4, 5) seitlich beiderseits der mobilen Elemente (7) zwischen den mobilen Elementen (7) und der Spule (2) angeordnet sind.

2. Elektromagnetischer Linearaktuator nach Anspruch 1, **dadurch gekennzeichnet, dass** sich die mobilen Elemente (7) in identischen Richtungen, jedoch entgegengesetzt verlagern.

3. Elektromagnetischer Linearaktuator nach Anspruch 1 oder 2, **dadurch gekennzeichnet, dass** der erste (4), zweite und dritte magnetisierte Pol (5) in Querrichtung orthogonal zur Symmetrieachse (15) der Spule (2) magnetisiert sind.

4. Elektromagnetischer Linearaktuator nach Anspruch 3, **dadurch gekennzeichnet, dass** der zweite und dritte magnetisierte Pol (5) in identischen Richtungen und entgegengesetzt zur Magnetisierungsrichtung des ersten magnetisierten Pols (4) magnetisiert sind.

5. Elektromagnetischer Linearaktuator nach einem der vorhergehenden Ansprüche, **dadurch gekennzeichnet, dass** der zweite und dritte magnetisierte Pol (5) fest miteinander verbunden sind.

6. Elektromagnetischer Linearaktuator nach einem der vorhergehenden Ansprüche, **dadurch gekennzeichnet, dass** die beiden Statorpole (13, 14) Vorsprünge aufweisen, die axial in Form von Polhörnern ausgerichtet sind.

7. Elektrischer Linearaktuator nach einem der vorhergehenden Ansprüche, **dadurch gekennzeichnet, dass** er zwei elektrisch unabhängige koaxiale Spulen (2) umfasst.

8. Elektromagnetischer Linearaktuator nach Anspruch 7, **dadurch gekennzeichnet, dass** die beiden Spulen (2) ineinandergreifen.

9. Elektromagnetischer Linearaktuator nach einem der Ansprüche 1 bis 8, **dadurch gekennzeichnet, dass** die elektrische Spule (2) von einem Körper (3) mit den Eigenschaften eines Permanentmagneten getragen wird und dass der zweite und dritte magnetisierte Pol (5) zumindest teilweise von dem Magnetkörper (3) gebildet sind.

10. Elektromagnetischer Linearaktuator nach einem der vorhergehenden Ansprüche, **dadurch gekennzeichnet, dass** die elektrische Spule (2) eine achssymmetrische Drehgeometrie aufweist.

11. Elektromagnetischer Linearaktuator nach einem der vorhergehenden Ansprüche, **dadurch gekennzeichnet, dass** der zweite und dritte magnetisierte Pol (5) von einem einzigen diametral magnetisierten Ring (5) gebildet sind.

12. Elektromagnetischer Linearaktuator nach einem der vorhergehenden Ansprüche, **dadurch gekennzeichnet, dass** er einen Positionssensor (11) umfasst, der die Position von mindestens einem der mobilen Elemente (7) anzeigt.

13. Elektromagnetischer Linearaktuator nach Anspruch 12, **dadurch gekennzeichnet, dass** der Positionssensor (11) in einer Aufnahme (12) in der Nähe der mobilen Elemente (7) angeordnet ist.

14. Elektromagnetischer Linearaktuator nach einem der vorhergehenden Ansprüche, **dadurch gekennzeichnet, dass** die mobilen Elemente (7) durch an den mobilen Elementen (7) angebrachte Ausgangsachsen (8) verlängert sind.

15. Elektromagnetischer Linearaktuator nach dem vorhergehenden Anspruch, **dadurch gekennzeichnet, dass** die mobilen Elemente (7) und die Ausgangsachsen (8) aus unterschiedlichen Materialien sind.

16. Elektromagnetischer Linearaktuator nach den Ansprüchen 14 oder 15, **dadurch gekennzeichnet, dass** der Achsabstand der mobilen Elemente (7) und der Achsabstand der Ausgangsachsen (8) unterschiedlich ist.

## Claims

1. Linear electromagnetic actuator comprising a stator (1) excited by at least one electric coil (2) which is arranged around an axis (15) of symmetry of the coil (2) and two ferromagnetic stator poles (13, 14) positioned axially on either side of the coil (2), also comprising at least two independent movable members (7), there being no mechanical connection between the two movable members (7), each of said movable members (7) being formed by a ferromagnetic material, **characterized in that** said actuator comprises at least three magnetized poles (4, 5) that are fixed relative to the movable members (7), each of the magnetized poles (4, 5) having permanent magnetization (22, 23) in the absence of current and being arranged inside the coil (2), respectively a first magnetized pole (4) positioned in the region of the median plane separating the two movable members (7) and containing the axis (15) of symmetry of the coil (2), and a second magnetized pole (5) and a third magnetized pole (5), said first, second and third magnetized poles (4, 5) being arranged laterally on either side of said movable members (7) between said movable members (7) and the coil (2).

2. Linear electromagnetic actuator according to claim 1, **characterized in that** the movable members (7) move in the same but opposite directions.

3. Linear electromagnetic actuator according to either claim 1 or claim 2, **characterized in that** the first (4), second and third magnetized poles (5) are magnetized in a transverse direction orthogonal to the axis (15) of symmetry of the coil (2).

4. Linear electromagnetic actuator according to claim 3, **characterized in that** the second and third magnetized poles (5) are magnetized in identical directions counter to the direction of magnetization of the first magnetized pole (4).

5. Linear electromagnetic actuator according to any of the preceding claims, **characterized in that** the second and third magnetized poles (5) are rigidly interconnected.

6. Linear electromagnetic actuator according to any of the preceding claims, **characterized in that** the two stator poles (13, 14) have axially oriented protrusions in the form of pole pieces.

7. Linear electromagnetic actuator according to any of the preceding claims, **characterized in that** it comprises two electrically independent coaxial coils (2).

8. Linear electromagnetic actuator according to claim 7, **characterized in that** the two coils (2) are lap-wound.

9. Linear electromagnetic actuator according to any of claims 1 to 8, **characterized in that** the electric coil (2) is supported by a body (3) having the properties of a permanent magnet, and **in that** the second and third magnetized poles (5) are formed by said magnetized body (3), at least in part.

10. Linear electromagnetic actuator according to any of the preceding claims, **characterized in that** the electric coil (2) has a rotationally axisymmetrical shape.

11. Linear electromagnetic actuator according to any of the preceding claims, **characterized in that** the second and third magnetized poles (5) consist of a single diametrically magnetized ring (5).

12. Linear electromagnetic actuator according to any of the preceding claims, **characterized in that** it comprises a position sensor (11) that indicates the position of at least one of the movable members (7).

13. Linear electromagnetic actuator according to claim 12, **characterized in that** the position sensor (11) is placed in a housing (12) close to the movable members (7).

14. Linear electromagnetic actuator according to any of the preceding claims, **characterized in that** the movable members (7) are extended by output shafts (8) mounted on the movable members (7).

15. Linear electromagnetic actuator according to the preceding claim, **characterized in that** the movable members (7) and the output shafts (8) are made of different materials.

16. Linear electromagnetic actuator according to either claim 14 or claim 15, **characterized in that** the center distance of the movable members (7) and the center distance of the output shafts (8) are different.
